# EUROPEAN PATENT SPECIFICATION

(11) **EP 0 598 446 B1**
(45) Date of publication and mention of the grant of the patent: **03.06.1998**
(21) Application number: 93203150.3
(22) Date of filing: 11.11.1993
(51) Int. Cl.: G11B 5/54

(54) **Motor drive circuit, as well as a data reading and/or recording apparatus comprising such a motor drive circuit**
Motorantriebsschaltung, und Datenaufzeichnungs- und/oder Wiedergabegerät mit einer solchen Schaltung
Circuit d'entraînement de moteur, et appareil d'enregistrement et/ou de reproduction de données comprenant un tel circuit

(30) Priority: 17.11.1992 EP 92203514
(43) Date of publication of application: 25.05.1994
(73) Proprietor: Philips Electronics N.V., 5621 BA Eindhoven (NL)
(72) Inventor: Bahlmann, Johannes P.M., c/o INT. OCTROOIBUREAU BV, NL-5656 AA Eindhoven (NL); Van Hout, Henricus M., c/o INT. OCTROOIBUREAU BV, NL-5656 AA Eindhoven (NL)
(74) Representative: Groenendaal, Antonius Wilhelmus Maria

(56) References cited:
- EP-A- 0 301 737
- EP-A- 0 332 058
- PATENT ABSTRACTS OF JAPAN vol. 12, no. 413 (P-780) 2 November 1988 & JP-A-63 149 886 (NEC CORP.) 22 June 1988
- PATENT ABSTRACTS OF JAPAN vol. 10, no. 374 (P-527) 12 December 1986 & JP-A-61 168 183 (SORD COMPUTER CORP.) 29 July 1986
- PATENT ABSTRACTS OF JAPAN vol. 9, no. 327 (P-415) 21 December 1985 & JP-A-60 150 275 (MITSUBISHI) 7 August 1985

## Description

The invention relates to a motor drive circuit for driving an electromotor with a permanent magnet rotor and a stator comprising one or more stator windings, the motor drive circuit comprising an excitation circuit for exciting the stator windings, a signal generation circuit for generating an emergency control signal which indicates a failure of the excitation of the stator windings, and an auxiliary power supply circuit for extracting electric energy from the motor in response to the emergency control signal and supplying the extracted energy to an auxiliary circuit, the auxiliary power supply circuit comprising a rectifier circuit inserted between at least one stator winding and the auxiliary circuit, the drive circuit comprises a short-circuit means for short-circuiting the at least one stator winding coupled to the rectifier circuit.

The invention further relates to a data reading and/or recording apparatus comprising a motor for driving in a rotating fashion a disc having a recording layer, a read/write head arranged opposite the recording layer and movable in radial direction relative to the disc, an actuator for moving the head and a positioning control means for energizing the actuator, and a motor drive circuit as defined in the opening paragraph, the positioning control means for its energy supply being coupled to the auxiliary power supply circuit and the positioning control means being arranged for causing the magnetic head to be moved to an idle position in response to the emergency control signal.

A motor drive circuit of this type as well as data read and/or recording apparatus in the form of a so-called magnetic hard disc drive are known, for example, from EP-A-0 301 737.

The use of a motor drive circuit of the type defined in the opening paragraph is especially interesting for these magnetic hard disc drives. With these hard disc drives an air cushion is developed between the read/write head and the disc as a result of the high speed of rotation of the disc thus avoiding mechanical contact between the head and the disc. If the drive motor is de-energized as a result of a power failure, the r.p.m. of the motor and thus the speed of rotation of the disc is reduced. In order to avoid the head contacting the disc when the motor is de-energized, the head is moved to an idle position by an electrically driven actuator before the disc speed has dropped below the critical value. The required electric power is extracted from the drive motor used as a generator in the case of a power failure.

Generally, the motor drive circuit and the logic circuits preferably have the same supply voltage. For reducing heat dissipation in the logic circuits, low voltages of the order of several volts are preferably chosen for the power supply of the logic circuits. If the motor used is also designed for these low voltages, the problem will occur that the voltage generated by the motor while acting as a generator is too low for the actuator to be energized for moving the head, because the generated voltage is only several volts. The useful voltage, however, is even considerably less as a result of the relatively large voltage drop across the diodes included in the rectifier circuit. It is an object of the invention to provide a motor drive circuit by which electric energy having a considerably higher voltage level can be extracted from the motor once the motor has been de-energized.

According to the invention this object is achieved by means of a motor drive circuit as defined in the opening paragraph, characterized in that the drive circuit comprises a control means coupled to the short-circuit means for causing the stator winding(s) coupled to the rectifier circuit to be temporarily intermittently short-circuited during the failure of the excitation of the stator windings.

As a result of the stator windings being short-circuited, the current in the stator winding will enhance to a relatively large value. The moment the short-circuit state is terminated, a large voltage will be induced in the stator winding as a result of the available self-inductance.

The invention will be further explained hereinafter with reference to the drawing, in which:
Fig. 1 shows an embodiment of a reading and recording apparatus according to the invention,
Fig. 2 shows an embodiment of the motor drive circuit according to the invention, and
Fig. 3 shows a circuit to be used in the motor drive circuit shown in Fig. 2.

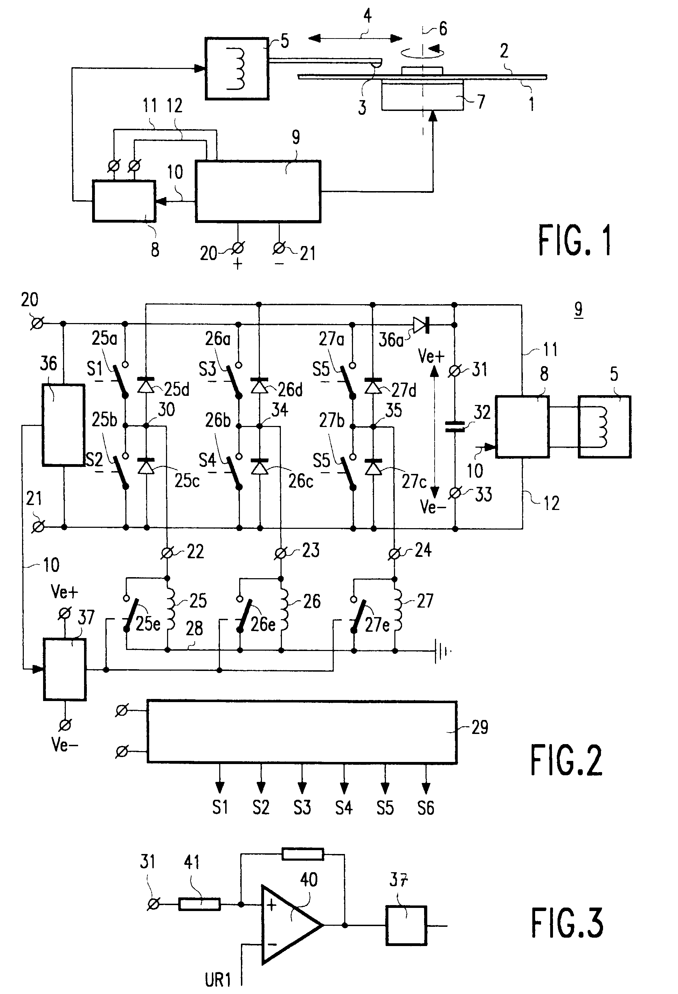

Fig. 1 shows an embodiment of a data reading and recording apparatus. The apparatus shown relates to what is commonly referred to as a magnetic hard disc drive. The apparatus comprises a disc to be rotated by a motor 7. The disc 1 is covered by a magnetic recording layer 2. Data may be customarily written on and read off the magnetic layer 2 by means of a magnetic head 3 which is radially movable in relation to the disc in a direction indicated by an arrow 4. When head 3 is moved, it is driven with the aid of an actuator 5. The actuator 5 is controlled by a positioning control means 8 of a customary type controlling the actuator 5 in response to an emergency control signal, so that the head 3 is moved to an idle position in which it is incapable of contacting the recording layer 2.

The emergency control signal is usually generated when there is a power failure of the motor 7. As a result, the r.p.m. of the disc will drop. With a falling r.p.m. of the disc 1 the air cushion between the rotating disc 1 and the head 3 can no longer be maintained. By moving the head to the idle position when there is a power failure of the motor, the head 3 is avoided contacting the recording layer and, as a result, damaging the layer and itself.

For a detailed description of the positioning control means as well as generation of the emergency control signal, reference be made, for example, to EP-A 0 224 378, GB-A 2 121 589 and US 4,371,903.

The motor 7 is a permanent magnet DC motor which drives the disc 1 rotating around an axis 6. Such a motor comprises a permanent magnet rotor and a stator having one or more stator windings. The motor 7 is energized by a motor drive circuit 9. In addition, the motor drive circuit 9 generates the emergency control signal and applies same through a signal line 10 to the positioning control means 8. Furthermore, the positioning control means 8 is fed from the motor drive circuit 9 through the supply lines 11 and 12.

Fig. 2 gives a detailed representation of an embodiment of the motor drive circuit 9. The motor drive circuit 9 comprises a positive supply terminal 20 and a negative supply terminal 21 which are to be connected to a DC voltage source for feeding the motor drive circuit. The motor drive circuit 9 further includes three output terminals 22, 23 and 24 connected to stator windings 25, 26 and 27 respectively, in a star configuration, of motor 7. The star point of the stator windings is denoted by a reference numeral 28 and preferably connected to ground potential. The stator winding 25 can be connected to the positive supply terminal 20 by an electronic switch 25a and to the negative supply terminal 21 by an electronic switch 25b. The stator winding 26 can be connected to the positive supply terminal 20 by an electronic switch 26a and to the negative supply terminal 21 by an electronic switch 26b. The stator winding 27 can be connected to the positive supply terminal 20 by an electronic switch 27a and to the negative supply terminal 21 by an electronic switch 27b. The switches 25a, 25b, 26a, 26b, 27a and 27b are rendered conductive and are shut off by a commutation circuit 29 generating the required control signals S1, ..., S6. The commutation circuit 29 is of a customary type operating the switches according to a cyclic pattern, in which the stator windings are energized with currents that generate a magnetic field of rotation as a result of which a rotary movement of the permanent magnet rotor is effected. The commutation instants may be determined depending on the rotor position as is customary in brushless DC motors. The rotor position may then be determined with the aid of magnetic sensors installed along the rotating rotor. The rotor position may also be determined on the basis of the counter-electromotive force induced in the stator windings by the rotor. The commutation instants may also be independent of the rotor position as is customary in synchronous motors. The switches 25b, 26b and 27b are bridged by what is commonly referred to as fly back diodes 25c, 26c and 27c. A junction 30 between these switches 25a and 25b is connected *via* a fly back diode 25d to a terminal 31 of a capacitor 32. Another terminal 33 of the capacitor 32 is connected to the negative supply terminal 21. A junction 34 between the switches 26a and 26b is also connected to the terminal 31 *via* a fly back diode 26d. A junction 35 between the switches 27a and 27b is also connected to the terminal 31 *via* a fly back diode 27d. Furthermore, the positive supply terminal 20 is connected to the terminal 31 *via* a diode 36a.

The terminals 31 and 33 are further connected to the respective power supply lines 11 and 12 for supplying electrical energy to the positioning control means 8.

The motor drive circuit according to the invention comprises a short-circuit means for short-circuiting at least one of the stator windings of the motor. In the embodiment shown in Fig. 2 the short-circuit means comprises three electronic switches 25e, 26e and 27e which are connected between the terminals 22, 23 and 24 respectively, and the star point 28 connected to ground potential, and thus bridge the respective stator windings 25, 26 and 27.

In response to the emergency control signal, the short-circuit means 37 alternately causes the switches 25e, 26e and 27e to open and close for temporarily intermittently short-circuiting the stator windings 25, 26 and 27. The short-circuit means 37 may comprise, for example, an oscillator of a customary type producing, when activated, a binary periodic output signal.

For generating the emergency control signal, the motor drive circuit comprises a signal generator 36 which produces a signal when there is a power failure of the motor 7. Such a circuit may comprise, for example, a voltage detector of a customary type connected to the supply terminals 20 and 21 and detecting whether the supply voltage has dropped below a specific minimum level.

The operation of the circuit is as follows. During normal operation the motor drive circuit is fed through the power supply terminals 20 and 21. The stator windings 25, 26 and 27 are alternately connected to the power supply terminals 20 and 21 in a cyclic switch pattern. As a result, the stator windings are supplied with AC currents driving the motor 7 and, consequently, the disc 1.

The positioning control means 8 is fed across the diode 36a. The moment the stator windings 25, 26 and 27 are de-energized as a result of a failure of the supply voltage between the supply terminals 20 and 21, the signal generator 36 will generate the emergency control signal.

This emergency control signal is applied to the positioning control means 8 which, in response thereto, energizes the actuator 5 so that the latter moves the head 3 in the direction of the idle position. In addition, the short-circuit means also receives the emergency control signal and will be activated thereby. During this operation the switches 25e, 26e and 27e are alternately opened and closed. In closed position the stator windings 25, 26 and 27 are short-circuited. Since the still rotating permanent magnet rotor generates inductance voltages in the stator windings 25, 26 and 27, the current in the stator windings will increase up to the moment when the situation of short-circuiting is interrupted again. After the interruption the current flowing in the stator winding will be maintained as a result of the self-inductance of the stator windings. These currents charge the capacitor 32 *via* the diodes 25a, 25b, 26a, 26b, 27a and 27b. For that matter, said diodes form a so-called three-phase rectifier inserted between the terminals 22, 23 and 24 and the capacitor 32. When the capacitor 32 is being charged, the current will gradually diminish until the stator windings in a next period of short-circuit are short-circuited again and the currents will increase again. By thus alternately short-circuiting the stator windings and interrupting this condition, the kinetic energy available in the motor and disc is converted into electric energy and supplied to the capacitor 32. Since the power supply lines of the positioning control means 8 are connected to the terminals 31 and 33 of the capacitor 32, the power supply to the positioning control means is maintained after the supply voltage between the voltage terminals has dropped during the running out of the motor 7. This period of time is sufficient to move head 3 to the idle position.

Though not necessary, it is to be preferred to control the voltage across the capacitor 32 to a constant value. This may be effected in a simple manner by making the switch pattern of the switches 25e, 26e and 27e depend on the voltage level across the capacitor. For example, it is possible to adjust the ratio between the time intervals in which the stator windings are short-circuited and the time intervals in which the short-circuit condition is interrupted. Another option is to deactivate the short-circuit means and thereby interrupt the short-circuiting of the stator coils once a specific upper limit R1 has been reached by the voltage across the terminals 31 and 33, until the voltage across the capacitor 32 has diminished below a lower limit R2. When the lower limit is reached, the short-circuit means 34 is re-activated after which the short-circuit condition is alternately caused to occur and interrupted.

Fig. 3 shows by way of example a circuit for activating and deactivating the short-circuit means 37.

The circuit shown comprises a so-called feedforward comparator circuit formed by an operational amplifier 40 whose inverting input is connected to reference voltage UR1. The non-inverting input is connected to the terminal 31 through a resistor 41 and to the output of the operational amplifier 40 through a resistor 42. The output signal of the operational amplifier 40 may be used as a control signal for activating and deactivating the short-circuit means.

The power supply to short-circuit means 37 and to the operational amplifier 40 is to be maintained when the power supply on the supply terminals 20 and 21 fails. Therefore, the power supply is to be provided by a separate power supply circuit. The circuit 37 as well as the amplifier 40 are preferably supplied through the terminals 31 and 32.

It should be observed that the invention is not restricted to the embodiments described hereinbefore. For example, it is possible to provide a short-circuit switch for part of the stator windings *in lieu of* all the stator windings. Alternatively, *in lieu of* bridging the stator windings by means of the short-circuit switch, it is possible to insert the short-circuit switch between the terminals of the motor (in the embodiment shown in Fig. 2 they are the terminals 22, 23 and 24).

Neither is it necessary, for that matter, that all the short-circuit switches are closed simultaneously. It is also possible to short-circuit the short-circuit switches in an alternating fashion.

It should further be observed that the invention is not restricted to multiphase motors, but that the invention is likewise applicable to single-phase motors.

In addition, it should be observed that, basically, the switches 25a, 25b, 26a, 26b, 27a and 27b may also be used for temporarily short-circuiting the stator windings. However, this is disadvantageous in that these switches are adapted for switching high currents. Operating such switches for high currents requires relatively much electric power. This is contrasted with separate switches 25e, 26e and 27e which only need to be activated in the case where the motor is operated as a generator and where, compared with normal motor operation, only small currents need to be switched.

Since one is to be sparing of the available energy once the main power supply has failed, the use of separate switches for short-circuiting the stator windings is thus to be preferred. The motor drive circuit according to the invention is pre-eminently suitable for use in combination with so-called hard disc drives. The use of the motor drive circuit, however, is not restricted to this application. Basically, the motor drive circuit is suitable for any use for which it is desirable in the case of a power failure to maintain the power supply to circuits for a brief period of time for carrying out necessary actions or operations.

## Claims

1. Motor drive circuit (9) for driving an electromotor with a permanent magnet rotor and a stator comprising one or more stator windings (25, 26, 27), the motor drive circuit comprising an excitation circuit for exciting the stator windings, a signal generation circuit for generating an emergency control signal (10) which indicates a failure of the excitation of the stator windings, and an auxiliary power supply circuit for extracting electric energy from the motor in response to the emergency control signal and supplying the extracted energy to an auxiliary circuit (8), the auxiliary power supply circuit comprising a rectifier circuit (25c, 25d; 26c, 26d; 27c, 27d) inserted between at least one stator winding and the auxiliary circuit, the drive circuit comprising a short-circuit means (25e; 26e; 27e) for short-circuiting the at least one stator winding coupled to the rectifier circuit, characterised in that the drive circuit comprises a control means (37) coupled to the short-circuit means for causing the stator winding(s) coupled to the rectifier circuit to be temporarily intermittently short-circuited during the failure of the excitation of the stator windings.

2. Drive circuit as claimed in Claim 1, characterized in that the short-circuit means comprises control means for controlling the short-circuiting in response to the voltage level of the energy supplied to the auxiliary circuit in a manner in which said voltage level remains substantially constant.

3. Drive circuit as claimed in Claim 1 or 2, characterized in that the auxiliary power supply circuit is coupled to the short-circuiting means for supplying power to the short-circuiting means.

4. Data reading and/or recording apparatus comprising a motor (7) for driving in a rotating fashion a disc (1) having a recording layer (2), a read/write head (3) arranged opposite the recording layer and movable in radial direction relative to the disc, an actuator (5) for moving the head and a positioning control means (8) for energizing the actuator, and a motor drive circuit (9) as defined in Claim 1, the positioning control means for its energy supply being coupled to the auxiliary power supply circuit and the positioning control means being arranged for causing the magnetic head to be moved to an idle position in response to the emergency control signal.

## Patentansprüche

1. Motorantriebsschaltung (9) zum Antreiben eines Elektromotors mit einem Dauermagnetläufer und einem Ständer mit einer oder mehreren Ständerwicklungen (25, 26, 27), wobei diese Motorantriebsschaltung mit einer Erregerschaltung zum Erregen der Ständerwicklungen, mit einer Signalerzeugungsschaltung zum Liefern eines Notsteuersignals (10), das angibt, daß die Erregung der Ständerwicklungen fortgefallen ist, und mit einer Hilfsspeiseschaltung versehen ist zum in Reaktion auf das Notsteuersignal Entnehmen elektrischer Energie vom Motor und zum Zu-führen der entnommenen Energie zu einer Hilfsschaltung (8), wobei diese Hilfsschaltung eine Gleichrichterschaltung (25c, 25d; 26c, 26d; 27c, 27d) aufweist, die zwischen wenigstens einer Ständerwicklung und der Hilfsschaltung vorgesehen ist, wobei die Antriebsschaltung eine Kurzschlußschaltung (25e; 26e; 27e) aufweist zum Kurz-schließen der wenigstens einen mit der Gleichrichterschaltung gekoppelten Ständerwicklung, dadurch gekennzeichnet, daß die Antriebsschaltung Steuermittel (37) aufweist, die mit einer Kurzschlußschaltung gekoppelt sind zum in Reaktion auf das Notsteuersignal Herbeiführen eines mit Intervallen vorübergehenden Kurzschlusses der mit der Gleichrichterschaltung gekoppelten Ständerwicklung(en) während der Abwesenheit der Erregung der Ständerwicklungen.

2. Antriebsschaltung nach Anspruch 1, dadurch gekennzeichnet, daß die Kurzschlußschaltung Steuermittel aufweist zur Steuerung des Kurzschlusses in Antwort auf den Spannungspegel der der Hilfsschaltung zugeführten Energie auf eine Art und Weise, in der der genannte Spannungspegel nahezu konstant bleibt.

3. Antriebsschaltung nach Anspruch 1 oder 2, dadurch gekennzeichnet, daß die Hilfsspeiseschaltung mit der Kurzschlußsteuerschaltung gekoppelt ist zur Speisung der Kurzschlußstsuerschaltung.

4. Datenauslese- und/oder -aufzeichnungsanordnung mit einem Motor zum drehenden Antreiben einer Platte mit einer Aufzeichnungsschicht, einem Schreib- und/oder Lesekopf, der gegenüber der Aufzeichnungsschicht vorgesehen ist und der in radialer Richtung gegenüber der Platte verlagerbar ist, einem Aktuator zum Verlagern des Kopfes und einer Verlagerungssteuerschaltung zum Erregen des Aktuators, und wobei diese Anordnung mit einer Motorantriebsschaltung nach einem der Ansprüche 1, 2 oder 3 versehen ist, wobei zwecks der Energieversorgung die Verlagerungssteuerschaltung zum Durchführen einer Verlagerung des Magnetkopfes in eine Ruhelage in Reaktion auf das Notsteuersignal eingerichtet ist.

## Revendications

1. Circuit d'entraînement de moteur (9) pour entraîner un moteur électrique comportant un rotor à aimant permanent et un stator comprenant un ou plusieurs enroulements statoriques (25, 26, 27), le circuit d'entraînement de moteur comprenant un circuit d'excitation pour exciter les enroulements statoriques, un circuit générateur de signaux pour générer un signal de commande dùrgence (10) qui indique une défaillance de l'excitation des enroulements statoriques, et un circuit d'alimentation auxiliaire pour extraire de l'energie électrique du moteur en réaction au signal de commande dùrgence et pour fournir l'energie extraite à un circuit auxiliaire (8), le circuit d'alimentation auxiliaire comprenant un circuit redresseur (25c, 25d; 26c, 26d; 27c, 27d) installé entre au moins un enroulement statorique et le circuit auxiliaire, le circuit d'entraînement comprenant un moyen de court-circuitage (25e; 26e; 27e) pour court-circuiter le au moins un enroulement statorique couplé au circuit redresseur, caractérisé en ce que le circuit d'entraînement comprend un moyen de commande (37) couplé au moyen de court-circuitage pour provoquer temporairement le court-circuitage par intermittence du ou des enroulements statoriques couplés au circuit redresseur pendant la défaillance de l'excitation des enroulements statoriques.

2. Circuit d'entraînement suivant la revendication 1, caractérisé en ce que le moyen de court-circuitage comprend un moyen de commande pour commander le court-circuitage en réaction au niveau de tension de l'energie fournie au circuit auxiliaire d'une façon selon laquelle le niveau de tension demeure sensiblement constant.

3. Circuit d'entraînement suivant la revendication 1 ou 2, caractérisé en ce que le circuit d'alimentation auxiliaire est couplé au moyen de court-circuitage pour fournir de l'energie au moyen de court-circuitage.

4. Appareil d'enregistrement et/ou de reproduction de données comprenant un moteur (7) pour entraîner en rotation un disque (1) présentant une couche d'enregistrement (2), une tête de lecture/écriture (3) disposée en face de la couche d'enregistrement et mobile dans une direction radiale par rapport au disque, un actionneur (5) pour déplacer la tête et un moyen de commande de positionnement (8) pour mettre sous tension l'actionneur, et un circuit d'entrainement de moteur (9) tel que défini dans la revendication 1, le moyen de commande de positionnement pour son alimentation en énergie étant couplé au circuit d'alimentation auxiliaire et le moyen de commande de positionnement étant agencé pour provoquer le déplacement de la tête magnétique vers une position de repos en réaction au signal de commande d'urgence.
